# EUROPEAN PATENT SPECIFICATION

(11) **EP 0 645 045 B1**
(45) Date of publication and mention of the grant of the patent: **24.04.1996**
(21) Application number: 93916113.9
(22) Date of filing: 21.07.1993
(51) Int. Cl.: G11B 23/03

(54) **OPTICAL COMPACT DISC STORAGE AND LOADING CASSETTE**
SPEICHER UND LADEKASSETTE FUR OPTISCHE COMPACT DISCS
CASSETTE DE STOCKAGE ET DE CHARGEMENT DE DISQUES COMPACTS OPTIQUES

(30) Priority: 07.04.1993 GB 9307293
(43) Date of publication of application: 29.03.1995
(73) Proprietor: DATA SPECIALISTS LIMITED, Leicester LE1 7NH (GB)
(72) Inventor: NEWELL, Terence, John, Leicester LE2 3SW (GB)
(74) Representative: Marshall, John Grahame
(86) International application number: GB9301530
(87) International publication number: WO9423431

(56) References cited:
- EP-A- 0 164 597
- EP-A- 0 498 607
- US-A- 5 155 647

## Description

### Field of the Invention

The invention relates to a storage and loading cassette for optical compact discs (CDs). Such cassettes can be used for storing a CD and, on insertion into a laser disc reader, presenting the CD to the disc drive and reading head of the disc reader without removal of the CD from the cassette.

### Background Art

Optical CDs, originally available only as CD ROMs, are a valuable storage medium for optically encoded digital information which can be randomly accessed by a laser reading head. They permit rapid access to vast amounts of pre-recorded information and are useful in a wide variety of computer-related applications including video games, computer databases and audio, video and audio-visual recordings. One advantage which CD ROMs have in the data retrieval field is that they cannot be over-written, so that they provide a security of recorded data as well as a vastly increased storage capacity, as compared with magnetic floppy discs for computer use. A more recent entry into the field of optical CDs is an erasible-rewritable CD which has all of the attributes of vast data storage, which is characteristic of a CD ROM, but the additional facility of the ability to erase or overwrite recorded data.

One characteristic of a CD reader, or a CD reader/writer (hereinafter referred to simply as a CD Reader) for serious commercial use as opposed to domestic hi-fi music systems, is that the disc may be loaded into the CD Reader while contained in a cassette. The cassette acts as a storage case or storage for the disc while the disc is out of the CD Reader, but enables the disc to be accessed and read (data access) while in the CD Reader.

There are two alternative types of storage and loading cassette currently available. In one type, the optical disc remains in the cassette during data access, with the laser reading head accessing the disc through a radial slot in the cassette. The slot is covered by a slide cover when the cassette is removed from the CD Reader. In the other type, the CD Reader includes a pincer mechanism for grasping the disc by its edges, withdrawing it from the cassette and placing it on a turntable, all automatically on loading the cassette into the CD Reader. The reverse sequence takes place automatically prior to ejection of the disc in its cassette from the CD Reader. The present invention is concerned with the former type of CD storage and loading cassette only. One such design of cassette is currently marketed under licence from Sony Corporation under the Trade Mark "CD Caddy", and comprises a tray with a radial base slot for the laser reading head, a lid for covering the disc, and a metal slide cover overlying the upper and lower surfaces of the cassette, for covering the radial base slot and protecting the disc when the cassette is removed from the CD Reader. CD Readers for such cassettes have a now standardized design that enables the CD Reader to engage and open the slide cover, raise the optical disc and lower the cassette until the disc is out of contact with the cassette, and rotate the disc at the required speed for data access, automatically on loading the cassette into the CD Reader.

The CD Caddy is a design of cassette that is expensive to manufacture, in that it comprises 14 components, 7 of which are injection moulded from thermoplastics material and 7 of which are fabricated from metal. It is desirable to simplify the design and reduce the manufacturing costs by reducing the number of components and in particular the number of metal components, but the greatest obstacle to such a redesign process is the fact that any new design of CD cassette would have to be fully compatible with existing CD Readers. The external physical dimensions of the new cassette would therefore have to match precisely the expectations of the CD Readers, and all the control surfaces would have to be in exactly the right places.

### Object of the Invention

It is an object of the invention to provide a CD storage and loading cassette which satisfies the above desiderata. Especially it is an object of the invention to provide such a CD storage and loading cassette which reduces the wear on the disc in use and which thus extends the disc life. It is a further object of the invention to produce a CD storage and loading cassette which is made wholly or substantially wholly from injection moulded components.

### The Invention

The invention provides a CD storage and loading cassette comprising a tray for receiving an optical compact disc, including a radial slot extending from an outer periphery of a compact disc received in the tray to a central drive hole of the compact disc for access of the whole surface of the disc by an optical reading head; a lid covering the tray; a slide cover located inside the cassette between the tray and the lid, comprising a shutter blade covering the whole of the slot when the cassette is removed from a CD Reader and being automatically slidable to an open position at one side of the slot on loading the cassette into the CD Reader characterized in that the tray includes supports moulded thereon for engagement with an outer peripheral edge of a compact disc received in the tray to define a rest position for the disc, and the slide cover further comprises an integrally moulded guide portion at one end of the shutter blade, slidable on a linear guide rail in the tray, and a parallel guide portion at an opposite end of the shutter blade and at an opposite side of the central drive hole of any compact disc received in the tray, received beneath a guide portion of the tray to hold the shutter blade in a plane between the tray and the disc rest position and to guide the shutter blade for linear sliding motion in that plane.

The slide cover and its moulded guide portion are preferably injection-moulded in one piece. The blade portion of the slide cover is preferably a thin plate or sheet, which if injection-moulded from a free-flowing resin for example an acetal resin such as that sold under the Trade Mark KEMATAL under carefully controlled conditions can be made to a thickness of 1 mm or less. The thermoplastics material from which the tray and the lid are moulded may be ABS or styrene, for example.

The supports moulded on the tray form what is known as a "landing zone" on which the disc rests when the storage is removed from the CD Reader. Normally a disc should have stopped rotating before it contacts the landing zone, but that is not always the case. Some CD Readers may have poor synchronization of the different moving parts, and in those circumstances if the disc is still rotating as it comes into contact with the landing zone of the CD storage and loading cassette, then the disc can become scratched. The CD Caddy has a landing zone which immediately surrounds the hub of the disc, in an annular zone that is also used to record disc alignment or timing data. Therefore, such prior art CD storage and loading cassettes have an inbuilt potential for failure whenever scratching of the disc in the landing zone area makes some or all of the encoded data unreadable. On the contrary, the landing zone of a disc in a CD storage and loading cassette according to the invention is preferably arranged at the outer perimeter of the disc, which is a zone in which there is no recordal of optical information. Scratching of the disc due to poor synchronization of the CD Reader is not therefore the problem it has been in the past, and disc life is dramatically improved. The landing zone is preferably defined by a number of discrete supports extending around more than 200°, preferably more than 260° of the disc.

The invention provides a CD storage and loading cassette in which all or substantially all the components are moulded. Such a cassette comprises a minimum of moulded components, namely a tray, a lid, a slide cover and a magnetic puck. A final component, a spring for urging the slide cover closed, may be made by injection-moulding or may be a metal coil spring. No other metal formed parts are necessary.

### DRAWINGS

The invention is illustrated by the drawings of which:
Figure 1 is an exploded perspective view of a CD storage and loading cassette according to the invention, without showing the CD which in use is to be loaded therein. In the exploded view, not all parts are in the correct alignment, and some require rotation to enable them to fit together;
Figure 2a is a plan view of the tray of the cassette of Figure 1;
Figure 2b is a side elevation of the tray of Figure 2a;
Figure 3a is a plan view from below of the lid of the cassette of Figure 1;
Figure 3b is a section taken along the line 3-3 of Figure 3a;
Figure 4 is a plan view of the slide cover of the cassette of Figure 1;
Figure 5a is a plan view of the assembled cassette of Figure 1, with a disc in place but with the lid removed;
Figure 5b is a plan view similar to that of Figure 5a but with the slide cover moved to one side to expose the disc through the radial slot in the tray, as it would be when loaded into a CD Reader;
Figures 6a, 7 and 8 are sections taken along the lines 6-6, 7-7 and 8-8 of Figure 5a;
Figure 6b is a section similar to that of Figure 6a but showing a modified guide portion of the slide cover;
Figure 9 is a cross-section through the puck of Figure 1;
Figures 10 and 11 are plan views of a modified slide cover comprising an integral spring portion, with the spring portion in its relaxed and extended conditions respectively;
Figure 12 is a perspective view of a modified CD storage and loading cassette according to the invention, which represents the current best mode of putting the invention into effect. In Figure 12, a pivot lid is shown raised;
Figure 13 is an exploded view of the storage and loading cassette of Figure 12;
Figure 14 is another exploded view of the cassette of Figure 12, from a position more directly above;
Figure 15 is a perspective view of the tray of Figure 12;
Figure 16 is a detail of one corner of the tray of Figure 15; viewed from a different angle;
Figure 17 is a detail of one end of the lid support, for cooperation with the corner of the tray shown in Figure 16;
Figure 18 is a perspective view of the slide cover of the cassette of Figure 12; and
Figure 19 is an enlarged detail taken from Figure 18.

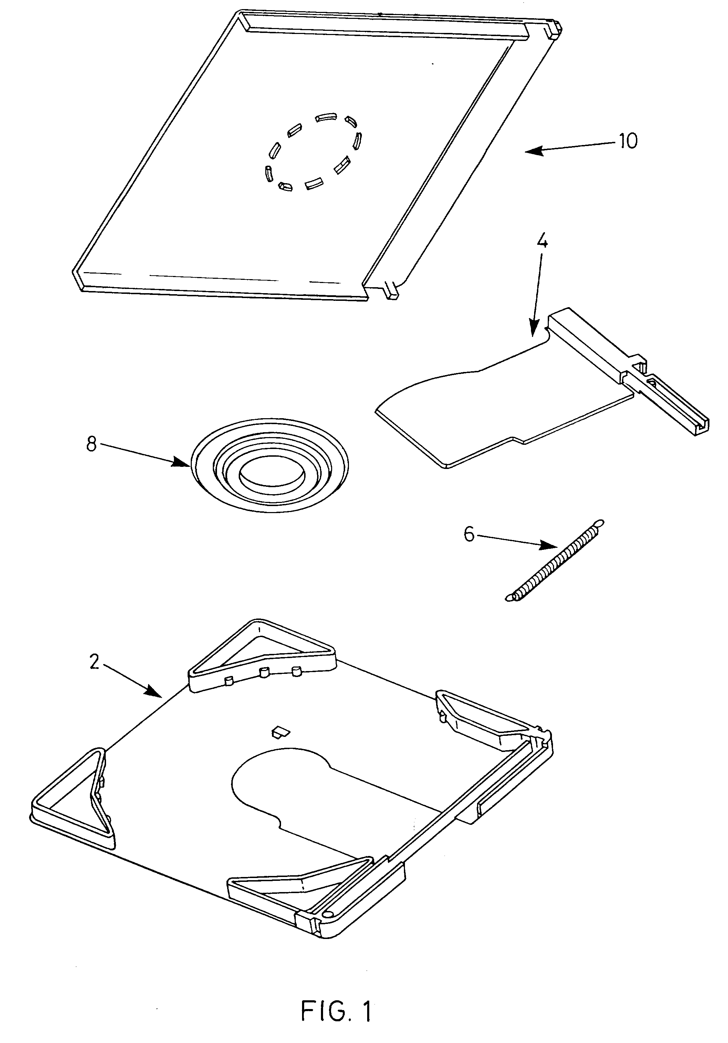

Referring first to Figure 1, the CD storage and loading cassette comprises a tray 2, a slide cover 4, a coil spring 6, a magnetically permeable puck 8 and a lid 10.

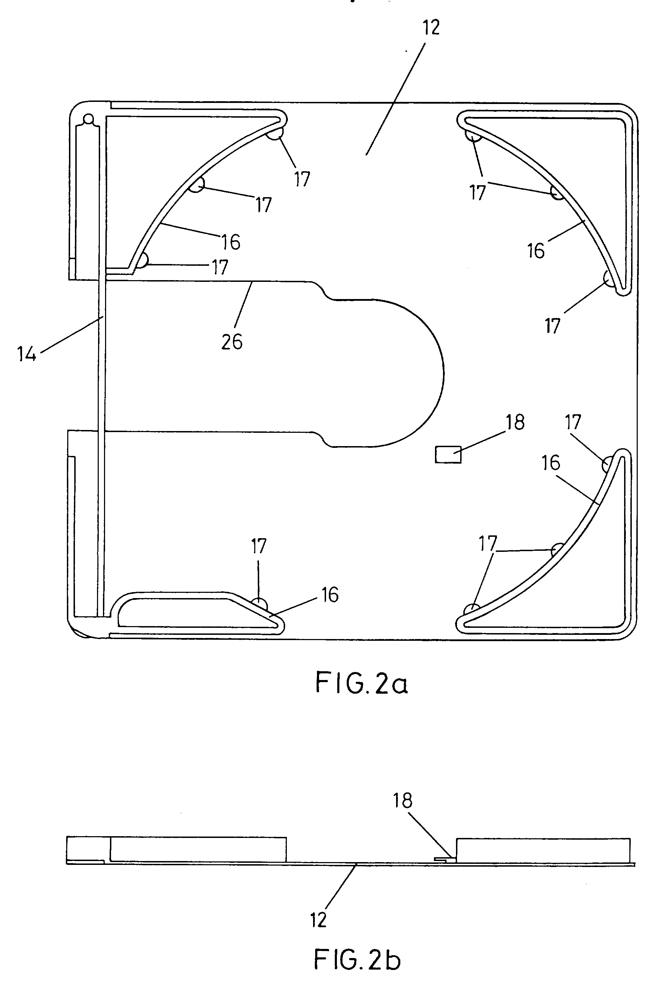

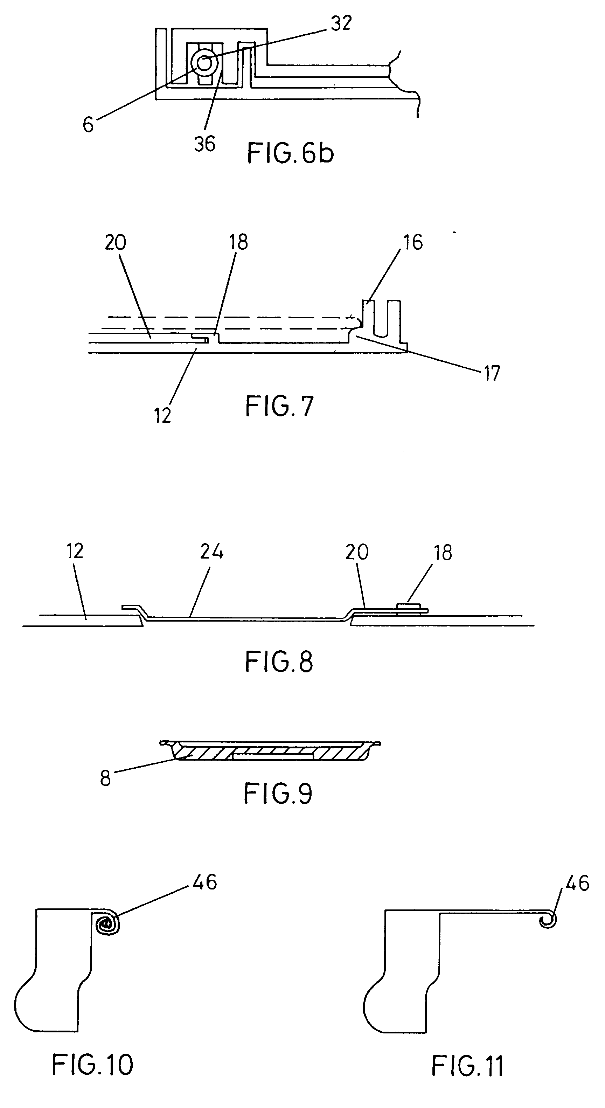

The tray 2 is illustrated in more detail in Figures 2a, 2b and 7. The tray 2 has a base 12 with a flat underside, an upstanding wall 14 parallel to one edge, and four upstanding walls 16 around a central disc-receiving area. Around the inside of the walls 16 are a number of integrally moulded raised portions 17 which together form a "landing zone" on which a disc may rest. The height of the landing zone from the bottom of the well is sufficient to prevent chafing of the disc by a moulded detent 18, and sufficient to accommodate a blade portion 20 of the slide cover 4 (Figures 7 and 8).

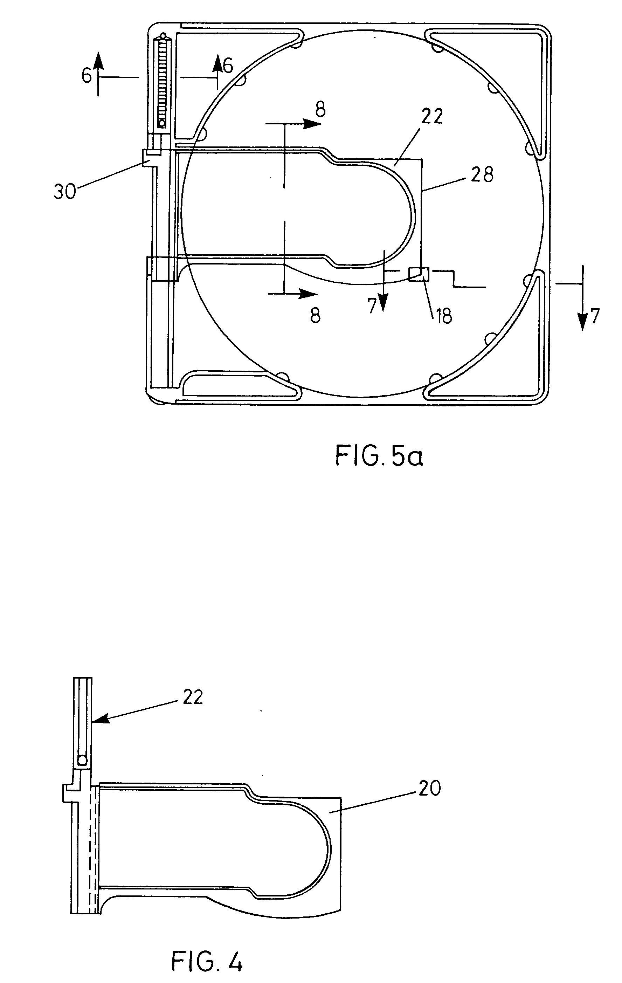

It will be seen that the slide cover 4 (Figure 4) comprises the moulded blade portion 20 and a moulded guide portion 22, preferably moulded together in one piece. The blade portion 20 is slightly profiled with a central dished portion 24 as shown in Figure 8, to locate in a radial slot 26 in the cassette tray when the slide cover is in its rest position shown in Figure 5a. One edge portion 28 of the blade portion 20 locates beneath the moulded detent 18. The detent 18 merely serves to anchor the distal end of the blade portion 20 and hold the blade portion away from the optical disc in use.

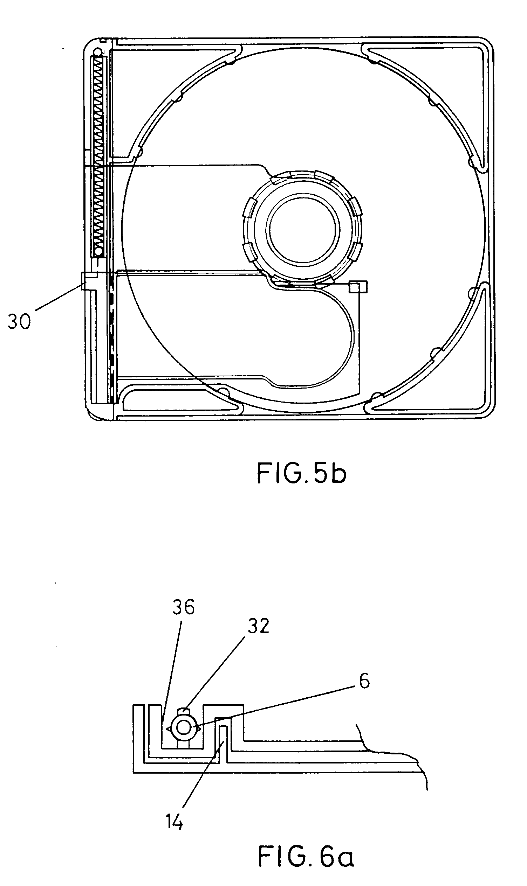

In use, when the cassette is loaded into a CD player, the player will engage a hook portion 30 of the guide portion 24 and move the guide portion laterally, physically to move the slide cover 4 to its open position against the bias of the spring 6 as shown in Figure 5b.

Assembly of the tray 2, slide cover 4 and spring 6 is perfectly simple. One end of the spring 6 is placed around a post 32 integrally moulded in the tray 2 as shown in Figure 6a. The other end of the spring 6 is pressed around a similar post 34 moulded in the underside of a downwardly facing channel 36 in the guide portion 24. The spring 6 is thus contained in the channel 34, and securely anchored at its ends. Figure 6b shows how, in an alternative construction, the channel 36 may be downwardly facing so that the spring 6 is totally enclosed.

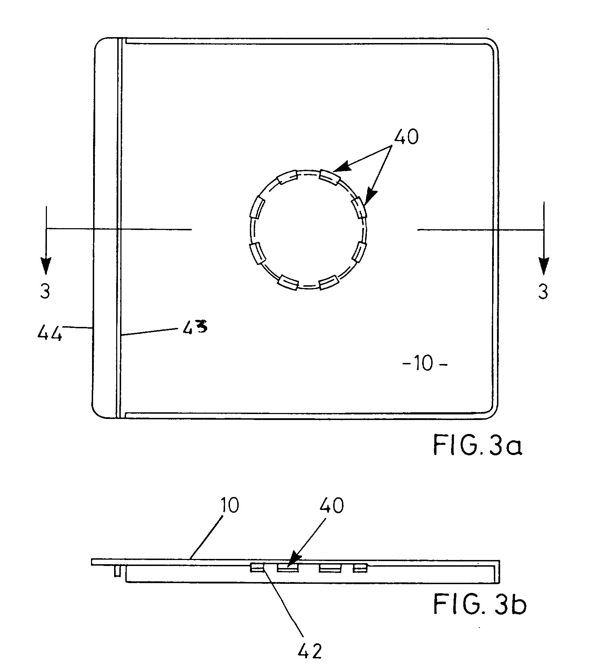

The puck 8 is shown in perspective view in Figure 1 and in section in Figure 9. It may be made by sintering a pulverized metal or ferrite, by injection-moulding a thermoplastics material containing a high proportion of magnetically permeable metal or ferrite particles, or by any other moulding process. The puck 8 is retained in a rod cage 40 moulded on the underside of the lid 10 (Figures 3a and 3b). The individual rods of the rod cage 40 have inwardly directed detent noses 42 between which the puck 8 can be pressed as a snap fit. The rod cage 40 can be made by injection-moulding using a collapsing core mould (for example a HASCO [Trade Mark] collapsing core mould) without losing the planar flat upper face of the lid 10.

The lid 10 may be provided with a flexure hinge 43 (optional) near to one edge portion 44 so that if that edge portion 44 is made fast to the corresponding edge of the tray (for example by welding or adhesive) then the lid may be opened and closed to permit the CD carried by the tray to be changed. Alternatively the lid 10 may be made fast to the tray all round its periphery so that, after sealing, the disc cannot be removed or changed.

The CD storage and loading cassette illustrated is of commercial utility in that it is compatible with existing CD Readers which are able to engage the hook 30 and automatically to open the slide cover 4 on loading the cassette into the CD Reader; it is formed from only four moulded parts (the tray 2, the slide cover 4, the puck 8 and the lid 10) in addition to the formed metal spring 6; and it has smooth flat planar top and bottom faces for the application of printed information relating to the disc contained in the cassette.

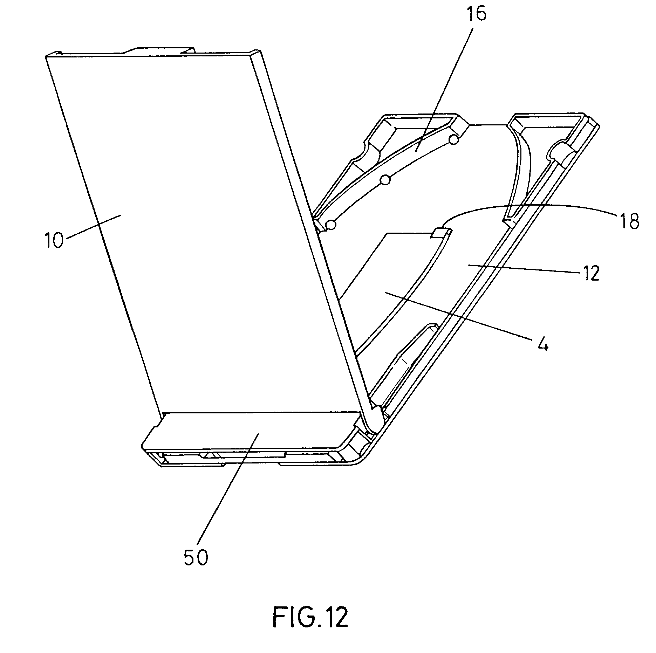

If it were desired to make the cassette wholly from moulded components, then the spring 6 could be replaced by a resilient moulded coil portion 46 of the slide cover 4 as illustrated schematically in Figures 10 and 11. Figure 10 illustrates the coil portion 46 in its rest position as it would be if the slide cover 4 were closed, and Figure 11 illustrates the coil portion 46 in its extended condition as it would be when the slide cover 4 were opened by the CD Reader to expose the disc through the slot 26.

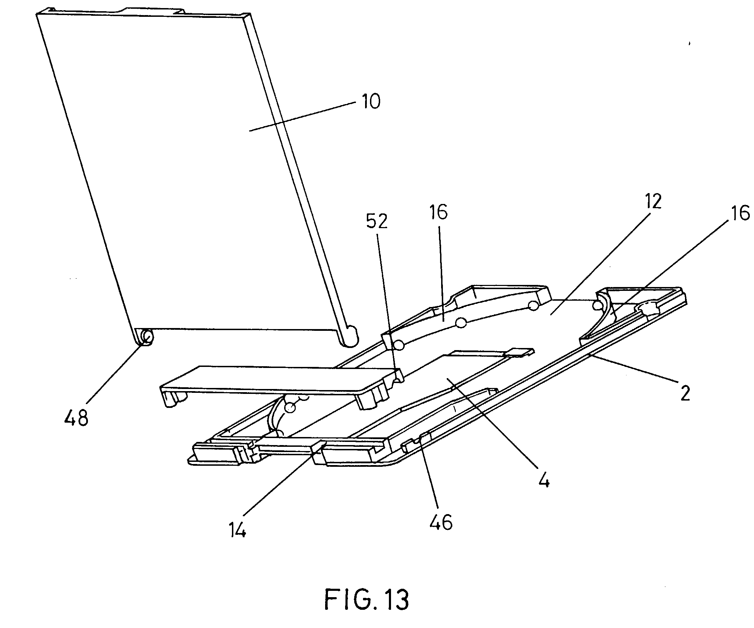

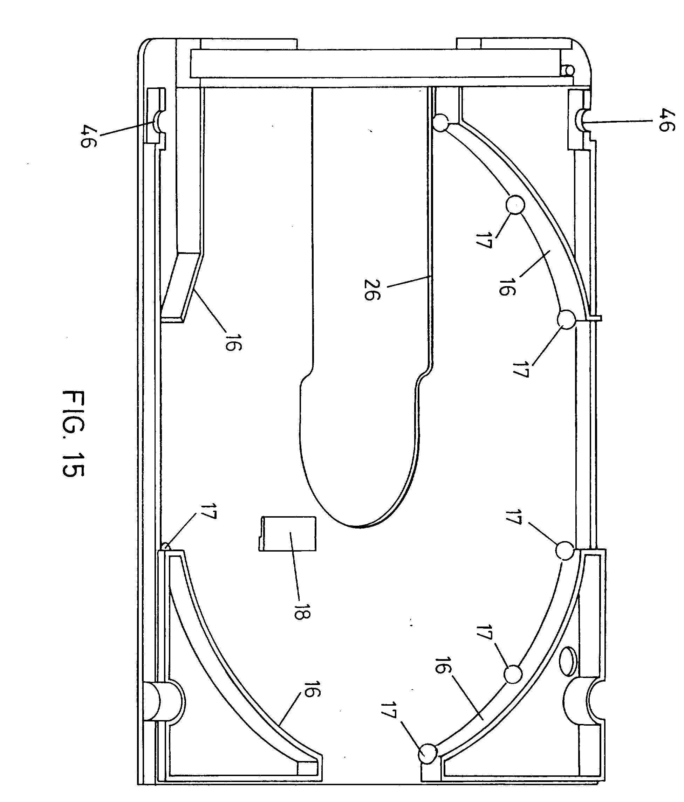

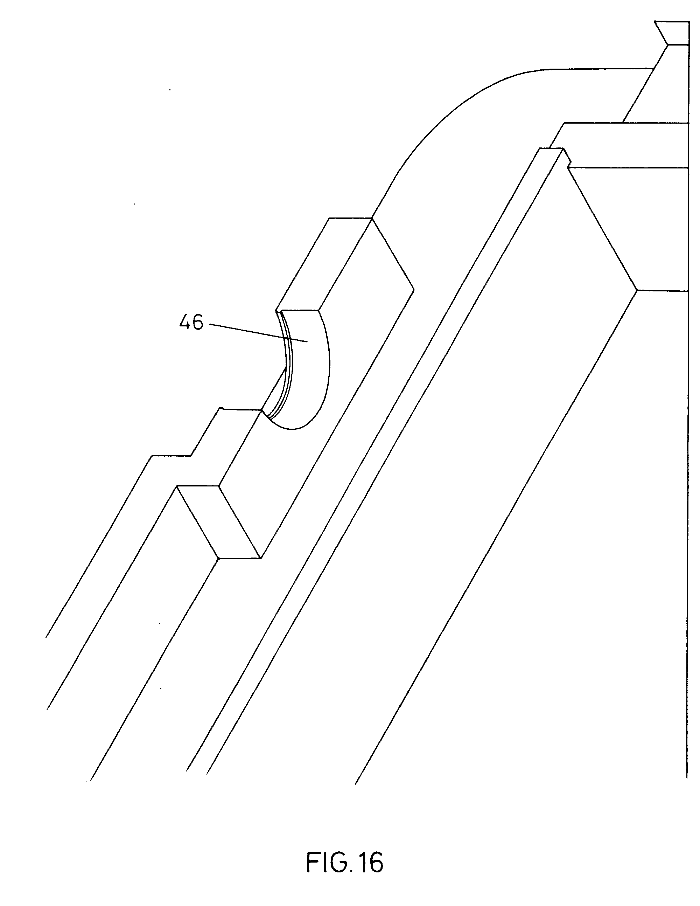

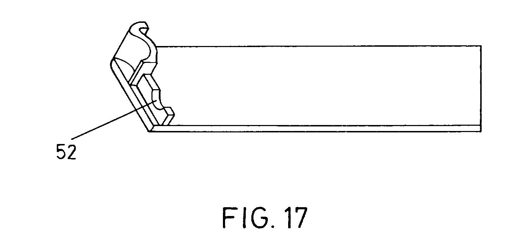

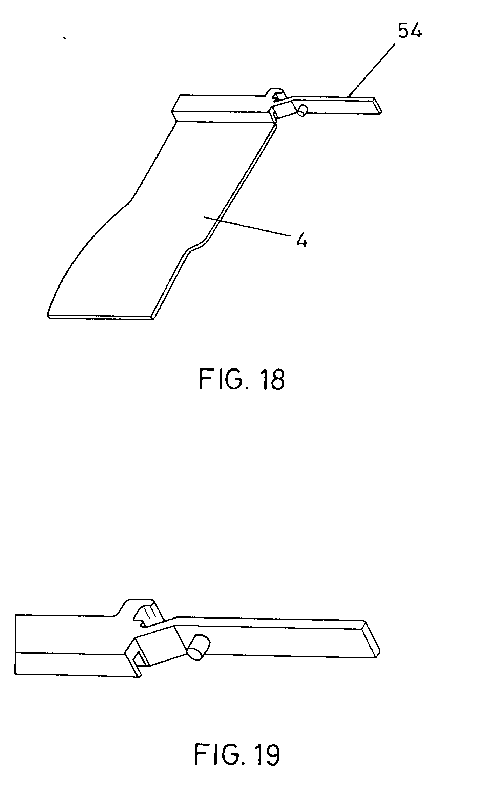

Figures 12 to 19 illustrate an alternative embodiment, in which the same reference numerals have been used as those used in Figures 1 to 11, in respect of the same or similar parts. The principal difference between the cassette of Figure 1 and that of Figure 12 is that the lid 10 of Figure 12 is pivoted in side recesses 46 of the tray 2 which receive moulded lugs 48 of the lid 10. The lugs 48 are held in the recesses 46 by a front cover plate 50 which has complementary recesses 52 formed therein. Figures 16 and 17 show the detail of the complementary recesses 46 and 52. It will be appreciated that Figures 16 and 17 are not to the same scale.

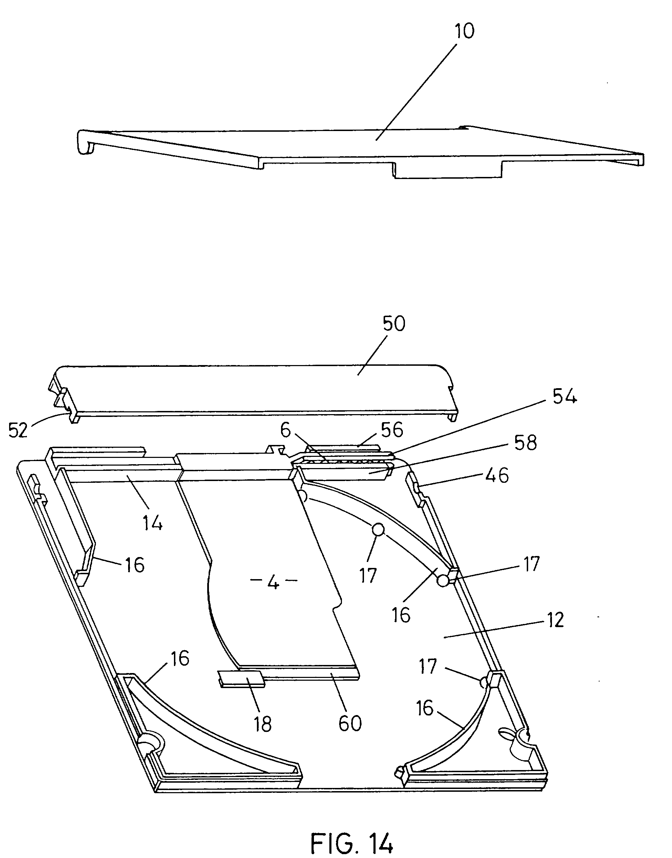

The moulded detent 18 of the embodiment of Figures 12 to 19 is proportioned slightly differently from that in Figures 1 to 11, having a greater dimension in the direction of sliding of the slide cover 4. The slide cover itself is constructed slightly differently, with a guide bar portion 54 receivable between two parallel walls 56 and 58 of the tray 2, and the coil spring 6 (shown only in Figure 14) located between the guide bar 54 and the inner wall 58. The inner end portion of the slide cover 4 is formed of a reduced wall thickness at 60 to accommodate the width of the detent 18.

The puck of the embodiment of Figures 12 to 19 is exactly the same as that of Figures 1 to 11, and is therefore not illustrated again separately.

## Claims

1. A CD storage and loading cassette comprising:
a tray (2) for receiving an optical compact disc, including a radial slot (26) extending from an outer periphery of a compact disc received in the tray to a central drive hole of the compact disc for access of the whole surface of the disc by an optical reading head;
a lid (10) covering the tray;
a slide cover (4) located inside the cassette between the tray and the lid, comprising a shutter blade (20) covering the whole of the slot when the cassette is removed from a CD Reader and being automatically slidable to an open position at one side of the slot on loading the cassette into the CD Reader,
characterized in that the tray includes supports (17) moulded thereon for engagement with an outer peripheral edge of a compact disc received in the tray to define a rest position for the disc, and the slide cover further comprises an integrally moulded guide portion (22) at one end of the shutter blade, slidable on a linear guide rail (14) in the tray, and a parallel guide portion at an opposite end of the shutter blade and at an opposite side of the central drive hole of any compact disc received in the tray, received beneath a guide portion (18) of the tray to hold the shutter blade in a plane between the tray and the disc rest position and to guide the shutter blade for linear sliding motion in that plane.

2. A CD cassette according to claim 1, wherein the supports (17) moulded on the tray define a minimum spacing between a CD received in the tray and a bottom inner surface (12) of the tray, and the moulded shutter blade (20) blade portion of the slide cover is of a thickness less than the said minimum spacing.

3. A CD cassette according to claim 1 or claim 2, wherein the slide cover (4) is injection-moulded in one piece.

4. A CD cassette according to any preceding claim, wherein the said opposite end of the shutter blade (20) is slidably received beneath an overhanging projection (18) upstanding from the inside of the tray.

5. A CD cassette according to any preceding claim, wherein the slide cover (4) is slidable to one side only of the radial slot (26), to define its open position.

6. A CD cassette according to any preceding claim, wherein the slide cover (4) is spring-biased towards its rest position.

7. A CD cassette according to claim 6, wherein the spring bias is provided by a coil spring (6) having its opposite ends anchored to the slide cover (4) and the tray (2) respectively.

8. A CD cassette according to claim 7, wherein the moulded guide portion (22) of the slide cover comprises an open channel portion (36) defined between two walls, the guide rail (14) of the tray comprises one wall of an interfitting open channel portion and the spring (6) is located in the innermost of the two open channel portions.

9. A CD cassette according to claim 6, wherein the spring bias is provided by an integrally moulded coiled portion (46) of the slide cover (4), the coiled portion having a natural resilience to assume the tightly coiled state in which state it holds the slide cover in its rest position.

## Patentansprüche

1. CD-Aufbewahrungs- und Ladekassette mit:
einem Aufnahmetablett (2) für eine optische Kompaktdisk, mit einem Radialschlitz (26), der sich von einem äußeren Umfangsbereich einer in dem Aufnahmetablett liegenden Kompaktdisk bis zu einer zentralen Antriebsbohrung der Kompaktdisk erstreckt, um den Zugriff eines optischen Lesekopfes auf den gesamten Oberflächenbereich der Scheibe (CD) zu ermöglichen;
einem Deckel (10), der das Aufnahmetablett abdeckt;
einem Schiebeverschluß (4), der auf der Innenseite der Kassette zwischen dem Aufnahmetablett und dem Deckel angeordnet ist und eine Schließlamelle (20) aufweist, die den Schlitz vollständig abdeckt, wenn die Kassette aus einem CD-Lesegerät entfernt wird und automatisch in eine geöffnete Stellung auf einer Seite des Schlitzes verschiebbar ist, wenn die Kassette in ein CD-Lesegerät eingelegt wird;
dadurch gekennzeichnet, daß das Aufnahmetablett Stützstege (17) umfaßt, die an dieses angespritzt sind, um an einer äußeren Umfangskante einer in das Tablett eingelegten Kompaktdisk zur Anlage zu kommen und so eine definierte Ruheposition für die Scheibe (CD) bilden, und daß der Schiebeverschluß weiterhin einen einstückig angespritzten Führungsbereich (22) an einem Ende der Verschlußlamelle aufweist, der in einer linearen Führungsschiene (14) in dem Aufnahmetablett verschiebbar ist, und einen parallelen Führungsbereich, an einem der Verschlußlamelle gegenüberliegenden Ende und an einer der zentralen Antriebsbohrung einer in das Tablett eingelegten Kompaktdisk gegenüberliegenden Seite gelegen, der unterhalb eines Führungsbereichs (18) des Tabletts aufgenommen wird, um die Verschlußlamelle in einer Ebene zwischen dem Tablett und der Scheiben-(CD)-Ruhestellung zu halten und die Verschlußlamelle für eine lineare Verschiebebewegung in dieser Ebene zu führen.

2. CD-Kassette nach Anspruch 1, wobei die in dem Tablett ausgebildeten Stützstege (17) einen Minimalabstand zwischen einer in dem Tablett aufgenommenen CD und einer inneren Bodenoberfläche (12) des Tabletts definieren, und wobei der Lamellenbereich des Formteils "Verschlußlamelle" (20) des Schiebeverschlusses eine Dicke aufweist, die kleiner ist als der genannte Minimalabstand.

3. CD-Kassette nach Anspruch 1 oder 2, wobei der Schiebeverschluß (4) ein in einem Stück hergestelltes Spritzgießteil ist.

4. CD-Kassette nach einem der vorhergehenden Ansprüche, wobei das genannte gegenüberliegende Ende der Verschlußlamelle (20) verschiebbar unter einem überkragenden Vorstand (18) angeordnet ist, der auf der Innenseite des Tabletts steht.

5. CD-Kassette nach einem der vorhergehenden Ansprüche, wobei der Schiebeverschluß (4) nur in eine Richtung des Radialschlitzes (26) verschiebbar ist, um seine Offen-Stellung zu definieren.

6. CD-Kassette nach einem der vorhergehenden Ansprüche, wobei der Schiebedeckel (4) durch eine Rückstellfeder in seiner Ruheposition gehalten wird.

7. CD-Kassette nach Anspruch 6, wobei die Federvorspannung durch eine Schraubenfeder (6) erzeugt wird, deren einander gegenüberliegende Enden an dem Schiebedeckel (4) bzw. an dem Tablett (2) angeschlagen sind.

8. CD-Kassette nach Anspruch 7, wobei der angespritzte Führungsbereich (22) des Schiebedeckels einen offenen Kanalbereich (36) aufweist, der zwischen zwei Wandungen ausgebildet ist, und die Führungsschiene (14) des Tabletts eine Wand eines zwischenpassenden offenen Kanalbereichs aufweist und die Feder (6) im innersten Bereich der beiden offenen Kanalbereiche angeordnet ist.

9. CD-Kassette nach Anspruch 6, wobei die Federvorspannung durch einen einstückig angespritzten Wendelbereich (46) des Schiebedeckels (44) erzeugt wird, wobei der Wendelbereich eine natürliche Rückfederung aufweist, um einen eng gewickelten Zustand einzunehmen, in welchem er den Schiebedeckel in seiner Ruheposition hält.

## Revendications

1. Cassette de stockage et de chargement de CD, comprenant :
un plateau (2) pour recevoir un disque compact optique, comprenant une encoche radiale (26) s'étendant depuis une périphérie extérieure d'un disque compact reçu dans le plateau jusqu'à un trou d'entraînement central du disque compact pour permettre à la tête de lecture optique d'accéder à la totalité de la surface du disque;
un couvercle (10) recouvrant le plateau;
un cache coulissant (4) situé à l'intérieur de la cassette entre le plateau et le couvercle, comprenant une lame obturatrice (20) recouvrant la totalité de l'encoche lorsque la cassette est retirée d'un lecteur de CD et pouvant coulisser automatiquement jusqu'à une position ouverte sur un côté de l'encoche lors du chargement de la cassette dans le lecteur de CD;
caractérisée en ce que le plateau comporte des supports (17) moulés sur lui pour coopérer avec un bord périphérique extérieur d'un disque compact reçu dans le plateau pour définir une position de repos pour le disque, et en ce que le cache coulissant comporte en outre une portion de guidage moulée d'un seul tenant (22) au niveau d'une extrémité de la lame obturatrice, pouvant coulisser sur un rail de guidage rectiligne (14) dans le plateau, et une portion de guidage parallèle au niveau d'une extrémité opposée de la lame obturatrice et au niveau d'un côté opposé du trou d'entraînement central de tout disque compact reçu dans le plateau, reçue en dessous d'une portion de guidage (18) du plateau pour tenir la lame obturatrice dans un plan compris entre le plateau et la position de repos du disque et pour guider la lame obturatrice pour un mouvement de coulissement rectiligne dans ce plan.

2. Cassette de CD selon la revendication 1, dans laquelle les supports (17) moulés sur le plateau définissent un espace minimal entre un CD reçu dans le plateau et une surface intérieure de fond (12) du plateau, et la portion de lame obturatrice moulée (20) du cache coulissant a une épaisseur inférieure audit espacement minimal.

3. Cassette de CD selon la revendication 1 ou la revendication 2, dans laquelle le cache coulissant (4) est moulé par injection en une seule pièce.

4. Cassette de CD selon l'une des revendications précédentes, dans laquelle ladite extrémité opposée de la lame obturatrice (20) est reçue à coulissement en dessous d'une saillie en porte-à-faux (18) partant verticalement de l'intérieur du plateau.

5. Cassette de CD selon l'une des revendications précédentes, dans laquelle le cache coulissant (4) peut coulisser vers un côté seulement de l'encoche radiale (26) pour définir sa position découverte.

6. Cassette de CD selon l'une des revendications précédentes, dans laquelle le cache coulissant (4) est rappelé par un ressort en direction de sa position de repos.

7. Cassette de CD selon la revendication 6, dans laquelle le rappel par ressort est procuré par un ressort hélicoïdal (6) ayant ses extrémités opposées fixées respectivement au cache coulissant (4) et au plateau (2).

8. Cassette de CD selon la revendication 7, dans laquelle la portion de guidage moulée (22) du cache coulissant comprend une portion de gouttière ouverte (36) définie entre deux parois, le rail de guidage (14) du plateau comprend une paroi d'une portion coopérante de gouttière ouverte et le ressort (6) est logé dans la portion la plus à l'intérieur des deux portions de gouttière ouverte.

9. Cassette de CD selon la revendication 6, dans laquelle le rappel par ressort est procuré par une portion enroulée en spirale et moulée d'un seul tenant (46) du cache coulissant (4), la portion enroulée en spirale ayant une élasticité naturelle pour prendre l'état étroitement enroulé dans lequel il maintient le cache coulissant dans sa position de repos.
